# EUROPÄISCHE PATENTSCHRIFT

(11) **EP 3 611 089 B1**
(45) Veröffentlichungstag und Bekanntmachung des Hinweises auf die Patenterteilung: **20.11.2024**
(21) Anmeldenummer: 19164985.4
(22) Anmeldetag: 25.03.2019
(51) Int. Cl.: B62M 3/08, A43B 5/14

(54) **AUS BAUTEILEN VON DREI HÄRTEN EINTEILIG AUSGEBILDETE SCHUHPLATTE FÜR RENNRADPEDALE**
COMPONENTS OF THREE HARDNESSES, ONE-PIECE CLEATS FOR RACE PEDALS
COMPOSANTS DE TROIS DURÉTES, GAINES EN UNE PIÈCE POUR PÉDALES DE COURSE

(30) Priorität: 15.08.2018 TW 107128486; 15.11.2018 DE 202018106478 U
(43) Veröffentlichungstag der Anmeldung: 19.02.2020
(73) Patentinhaber: Hsieh, Chin-Long, Taichung City 432 (TW)
(72) Erfinder: Hsieh, Chin-Long, Taichung City 432 (TW)
(74) Vertreter: Lang, Christian

(56) Entgegenhaltungen:
- EP-A1- 0 153 210
- DE-U1- 202018 106 478
- JP-U- 3 218 904
- US-A1- 2007 094 898
- US-A1- 2014 260 785

## Beschreibung

### Technisches Gebiet

Die Erfindung betrifft eine Schuhplatte für Rennradpedale, insbesondere eine aus Bauteilen von drei Härten einteilig ausgebildete Schuhplatte für Rennradpedale.

### Stand der Technik

Herkömmliche Schuhplatten für Rennradpedale sind meistens aus harten und zähen synthetischen Kunststoffen (z.B. Nylon und Glasfasern) hergestellt, damit die Schuhplatte gewiss mit dem Fahrradpedal verrastet und an demselben positioniert wird. Da die Schuhplatte die Fläche der Schuhsohle übersteht, kann der Fahrer leicht ausrutschen, wenn er nach dem Abstieg vom Fahrrad mit der Schuhplatte auf den Boden tritt. Bei den herkömmlichen Schuhplatten aus synthetischen Kunststoffen gibt es den weiteren Nachteil, dass das Material der in das Vorder- und Hinterteil des Pedals einrastenden Einrastteile der Schuhplatte eine mangelhafte Härte aufweist, aufgrund deren das Ein- und Ausrasten erschwert wird. Zur Lösung des Problems hat der Erfinder beispielsweise eine Schuhplatte aus zwei verschiedenen Materialien vorgeschlagen, wobei auf der Unterseite der Schuhplatte zusätzlich eine weiche Lage angebracht ist, die ein Ausrutschen des Fahrers nach dem Abstieg vom Fahrrad verhindern soll. Jedoch bleibt das Problem, dass das Ein- und Ausrasten zwischen der Schuhplatte und dem Pedal aufgrund der mangelhaften Härte des Materials erschwert wird, weiterhin ungelöst.

Dokument US 2007/0094898 A1 bildet den nächstliegenden Stand der Technik für den Gegenstand nach Anspruch 1 und 5.

### Aufgabe der Erfindung

Der Erfindung liegt die Aufgabe zugrunde, eine aus Bauteilen von drei Härten einteilig ausgebildete Schuhplatte für Rennradpedale zu schaffen, wobei das vordere Klickelement und das hintere Klickelement der Schuhplatte aus einem starren Keramik-Material von einer extrem großen Härte oder einem technischen Kunststoff (Polyoxymethylen, POM) , die grundlegende Klickplatte aus einem Verbundstoff oder glasgefülltem Nylon und die Rutschhemmscheibe und die mittlere Rutschhemmscheibe aus einem weichen Kunststoff (thermoplastischem Polyurethan, TPU), Kautschuk oder einem Kautschuk oder Kunststoff nachahmenden Material hergestellt sind, wobei diese drei Materialien zusammengesetzt und einteilig ausgebildet sind, wobei sich die Schuhplatte leicht von dem Klicksystem des Pedals löst oder einen großen Reibungskoeffizienten aufweist, der dem Benutzer das Laufen mit der Schuhplatte erleichtert.

### Technische Lösung

Diese Aufgabe wird erfindungsgemäß durch eine aus Bauteilen von drei Härten einteilig ausgebildete Schuhplatte für Rennradpedale mit den Merkmalen der Ansprüche 1 und 5 gelöst. Vorteilhafte Ausgestaltungen sind Gegenstand der abhängigen Ansprüche.

Die erfindungsgemäße, aus Bauteilen von drei Härten einteilig ausgebildete Schuhplatte für Rennradpedale umfasst eine grundlegende Klickplatte, die etwas plattenförmig ausgebildet ist, wobei die Oberseite der grundlegenden Klickplatte in einer Schuhsohle eines Fahrradschuhs montiert wird, wobei ein vorderes Klickelement am vorderen Ende der Oberseite der grundlegenden Klickplatte, ein hinteres Klickelement am hinteren Ende der Oberseite der grundlegenden Klickplatte, eine Rutschhemmscheibe in der untersten Lage der grundlegenden Klickplatte und eine mittlere Rutschhemmscheibe in der Mitte der untersten Lage der grundlegenden Klickplatte angeordnet ist, wobei die grundlegende Klickplatte, das vordere Klickelement, das hintere Klickelement, die Rutschhemmscheibe und die mittlere Rutschhemmscheibe zusammengesetzt und einteilig ausgebildet sind, wobei das vordere und hintere Klickelement aus einem starren Keramik-Material von einer extrem großen Härte oder einem technischen Kunststoff (Polyoxymethylen, POM), die grundlegende Klickplatte aus einem Verbundstoff oder glasgefülltem Nylon und die Rutschhemmscheibe und die mittlere Rutschhemmscheibe aus einem weichen Kunststoff (thermoplastischem Polyurethan, TPU) , Kautschuk oder einem Kautschuk oder Kunststoff nachahmenden Material hergestellt sind, wobei das vordere und hintere Klickelement eine große Härte und einen kleinen Reibungskoeffizienten aufweisen, dadurch glatt sind und sich leicht lösen, sodass das Ein- und Ausrasten der Schuhplatte in das Pedal bzw. aus dem Pedal effizienter und ungehindert erfolgt. Die Rutschhemmscheibe und die mittlere Rutschhemmscheibe weisen einen großen Reibungskoeffizienten auf, der dafür sorgt, dass die Schuhe im statischen Zustand besser bremsen und der Benutzer mit den Fahrradschuhen besser laufen kann, wenn das Fahrrad anhält.

### Kurze Beschreibung der Zeichnungen

- Figur 1: zeigt eine Draufsicht auf ein erstes Ausführungsbeispiel einer erfindungsgemäßen Schuhplatte in einer Explosionsdarstellung,
- Figur 2: zeigt eine Draufsicht auf das erste Ausführungsbeispiel einer erfindungsgemäßen Schuhplatte im aufgebauten Zustand,
- Figur 3: zeigt eine Unteransicht des ersten Ausführungsbeispiels einer erfindungsgemäßen Schuhplatte in einer Explosionsdarstellung,
- Figur 4: zeigt eine Unteransicht des ersten Ausführungsbeispiels einer erfindungsgemäßen Schuhplatte im aufgebauten Zustand,
- Figur 5: zeigt eine perspektivische Ansicht einer an einer Schuhsohle eines Fahrradschuhs befestigten erfindungsgemäßen Schuhplatte,
- Figur 6: zeigt eine perspektivische Ansicht zur Veranschaulichung einer erfindungsgemäßen Schuhplatte und eines Klicksystems eines Fahrradpedals in ihrer aufeinander bezogenen Stellung,
- Figur 7: zeigt eine Unteransicht der Hinterseite des ersten Ausführungsbeispiels einer erfindungsgemäßen Schuhplatte in einer Explosionsdarstellung,
- Figur 8: zeigt eine perspektivische Ansicht der Hinterseite des ersten Ausführungsbeispiels einer erfindungsgemäßen Schuhplatte im aufgebauten Zustand,
- Figur 9: zeigt eine planare Unteransicht des ersten Ausführungsbeispiels einer erfindungsgemäßen Schuhplatte im aufgebauten Zustand,
- Figur 10: zeigt eine Draufsicht auf ein zweites Ausführungsbeispiel einer erfindungsgemäßen Schuhplatte in einer Explosionsdarstellung,
- Figur 11: zeigt eine Draufsicht auf das zweite Ausführungsbeispiel einer erfindungsgemäßen Schuhplatte im aufgebauten Zustand,
- Figur 12: zeigt eine Unteransicht des zweiten Ausführungsbeispiels einer erfindungsgemäßen Schuhplatte in einer Explosionsdarstellung und
- Figur 13: zeigt eine Unteransicht des zweiten Ausführungsbeispiels einer erfindungsgemäßen Schuhplatte im aufgebauten Zustand.

### Detaillierte Beschreibung der bevorzugten Ausführungsbeispiele

Im Folgenden werden Aufgaben, Merkmale und Vorteile der vorliegenden Erfindung anhand der detaillierten Beschreibung von bevorzugten Ausführungsbeispielen und der beigefügten Zeichnungen näher erläutert. Die Erfindung ist jedoch nicht auf die Beschreibung dieser Ausführungsbeispiele und die beigefügten Zeichnungen beschränkt.

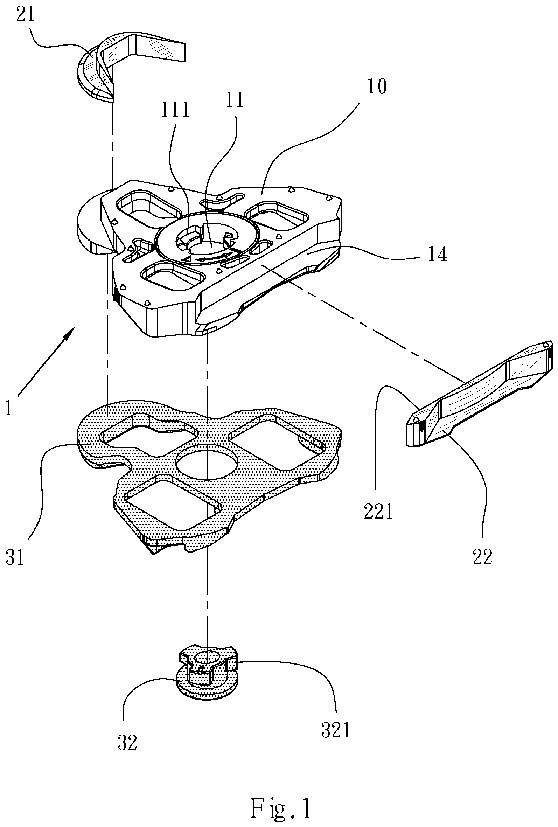

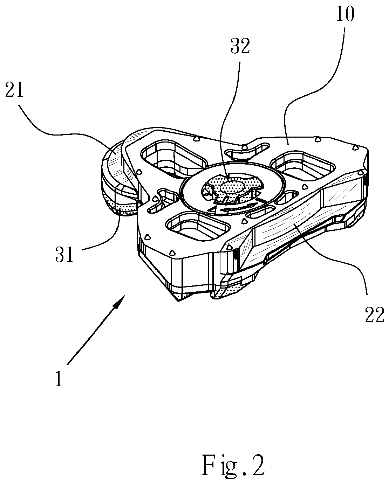

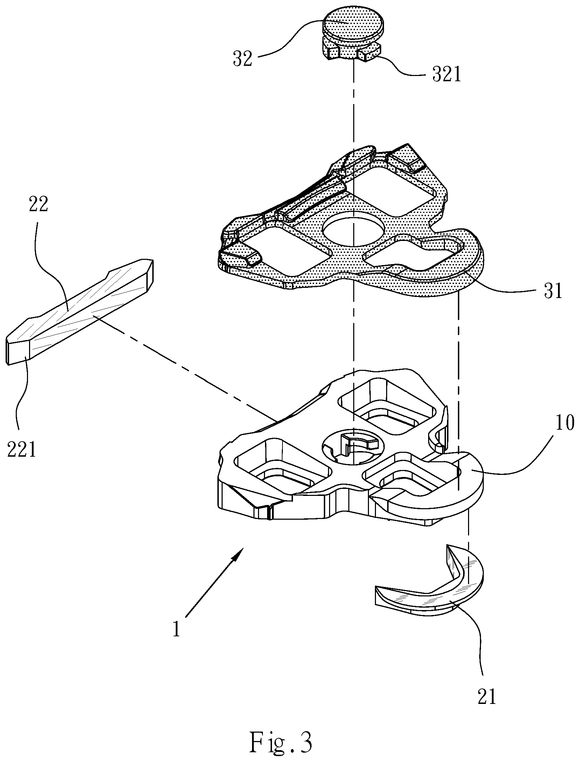

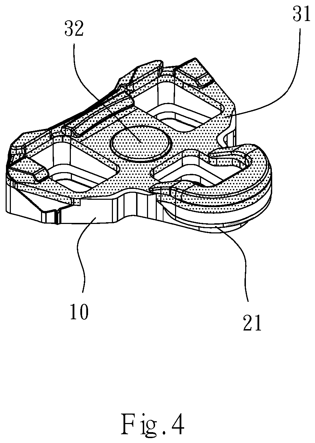

Wie in Fig. 1 bis Fig. 4 gezeigt ist, umfasst die erfindungsgemäße, aus Bauteilen von drei Härten einteilig ausgebildete Schuhplatte 1 für Rennradpedale eine grundlegende Klickplatte 10, die etwas plattenförmig ausgebildet ist, wobei die Oberseite der grundlegenden Klickplatte 10 in einer Schuhsohle 51 eines Fahrradschuhs 50 montiert wird, wobei ein vorderes Klickelement 21 am vorderen Ende der Oberseite der grundlegenden Klickplatte 10, ein hinteres Klickelement 22 am hinteren Ende der Oberseite der grundlegenden Klickplatte 10, eine Rutschhemmscheibe 31 in der untersten Lage der grundlegenden Klickplatte 10 und eine mittlere Rutschhemmscheibe 32 in der Mitte der untersten Lage der grundlegenden Klickplatte 10 angeordnet ist, wobei die grundlegende Klickplatte 10, das vordere Klickelement 21, das hintere Klickelement 22, die Rutschhemmscheibe 31 und die mittlere Rutschhemmscheibe 32 zusammengesetzt und einteilig ausgebildet sind, wobei das vordere und hintere Klickelement 21, 22 aus einem starren Keramik-Material von einer extrem großen Härte oder einem technischen Kunststoff (Polyoxymethylen, POM), die grundlegende Klickplatte aus einem Verbundstoff oder glasgefülltem Nylon und die Rutschhemmscheibe und die mittlere Rutschhemmscheibe aus einem weichen Kunststoff (thermoplastischem Polyurethan, TPU) , Kautschuk oder einem Kautschuk oder Kunststoff nachahmenden Material hergestellt sind, wobei das vordere und hintere Klickelement 21, 22 eine große Härte und einen kleinen Reibungskoeffizienten aufweisen, dadurch glatt sind und sich leicht von einem Klicksystem 41 eines Pedals 40 lösen, sodass das Ein- und Ausrasten der Schuhplatte in das Pedal 40 bzw. aus dem Pedal 40 effizienter und ungehindert erfolgt. Die Rutschhemmscheibe 31 und die mittlere Rutschhemmscheibe 32 weisen einen großen Reibungskoeffizienten auf, der dafür sorgt, dass die Schuhe im statischen Zustand besser bremsen und der Benutzer mit den Fahrradschuhen besser laufen kann, wenn das Fahrrad anhält.

Beim genannten Kautschuk nachahmenden Material handelt es sich um ein Material, das abriebfest sowie rutschfest ist und schnell bremsen und im statischen Zustand gut anhalten kann. Beim genannten Verbundstoff handelt es sich um einen Verbundstoff, der über eine ausreichende Starrheit und eine gute Zähigkeit verfügt.

Bei der erfindungsgemäßen, aus Bauteilen von drei Härten einteilig ausgebildeten Schuhplatte 1 für Rennradpedale ist die mittlere Rutschhemmscheibe 32 in der Mitte der untersten Lage der grundlegenden Klickplatte 10 angeordnet, wobei an einer der mittleren Rutschhemmscheibe 32 entsprechenden Stelle an der grundlegenden Klickplatte 10 eine Öffnung 11 angeordnet ist, in der eine Aussparung 111 mit vorspringenden Zähnen ausgebildet ist. An der mittleren Rutschhemmscheibe 32 ist eine Säule 321 angeordnet, mittels deren die mittlere Rutschhemmscheibe 32 und die grundlegende Klickplatte 10 einteilig miteinander verbunden werden. Es ist auch denkbar, die Säule 321, die mit einem weiteren Bauteil zusammensetzbar ist, so zum Einrasten in die Aussparung 111 mit vorspringenden Zähnen zu bringen, dass die Säule 321 in der Aussparung 111 befestigt wird.

Bei der erfindungsgemäßen, aus Bauteilen von drei Härten einteilig ausgebildeten Schuhplatte 1 für Rennradpedale ist an dem Hinterteil der Oberseite der grundlegenden Klickplatte 10 eine mehrwinklige dreidimensionale Schnittfläche 14 angeordnet und am hinteren Klickelement 22 ist eine entsprechende mehrwinklige Schnittfläche 221 angeordnet, die an der mehrwinkligen dreidimensionalen Schnittfläche 14 passgenau anliegen kann, wobei die Kombination der beiden Schnittflächen 14, 221 dafür sorgt, dass die Schuhplatte 1 fester einteilig zusammengesetzt wird.

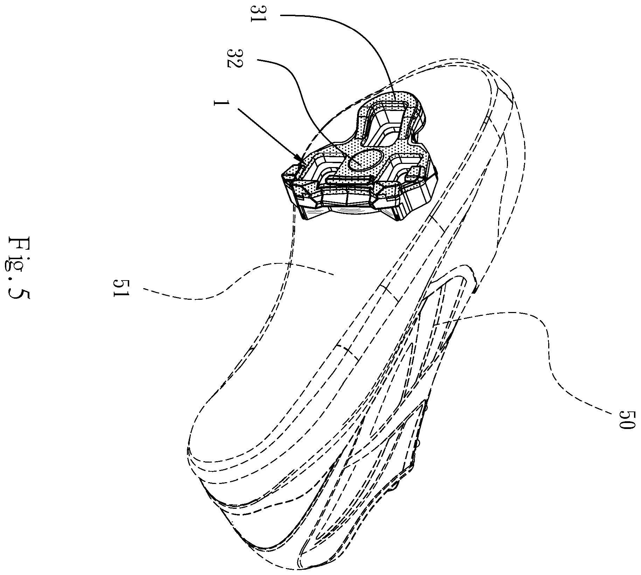

Fig. 5 zeigt schematisch eine an einer Schuhsohle 51 eines Fahrradschuhs 50 befestigte, erfindungsgemäße Schuhplatte 1 für Rennradpedale . Wenn der Fahrer während der Fahrt das Fahrrad verlässt und auf den Boden tritt, berührt erst die Schuhplatte 1 für Rennradpedale den Boden. Die herkömmliche Schuhplatte für Rennradpedale ist hart und weist einen kleinen Reibungskoeffizienten auf und rutscht deswegen beim Kontakt mit dem Boden sehr leicht aus, was für den Benutzer des Fahrradschuhs 50 gefährlich ist. Beim Kontakt der erfindungsgemäßen Schuhplatte 1 für Rennradpedale mit dem Boden berühren die Rutschhemmscheibe 31 und die mittlere Rutschhemmscheibe 32 den Boden, wobei die Rutschhemmscheibe 31 und die mittlere Rutschhemmscheibe 32 aus einem Material mit einem großen Reibungskoeffizienten, z.B. einem weichen Kunststoff (thermoplastischem Polyurethan, TPU), Kautschuk oder einem Kautschuk oder Kunststoff nachahmenden Material, hergestellt sind. Solche Materialen sorgen dafür, dass der Benutzer der Schuhplatte 1 leicht auf dem Boden läuft und nicht ausrutscht.

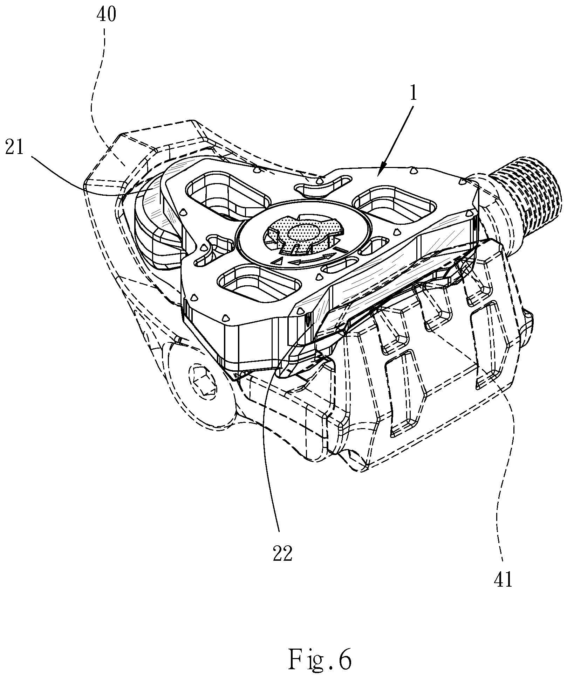

Wie in Fig. 6 gezeigt ist, ist die Schuhplatte 1 für Rennradpedale im Normalzustand an der Schuhsohle 51 des Fahrradschuhs 50 befestigt. In Fig. 6 sollen lediglich die aufeinander bezogenen Positionen der Schuhplatte 1 und des Klicksystems 41 des Fahrradpedals 40 veranschaulicht werden und es geht hier nicht um den tatsächlichen Gebrauchszustand der Schuhplatte 1 und des Klicksystems 41. Wenn der Benutzer den Fahrradschuh 50 trägt und die Schuhplatte 1 auf der Schuhsohle 51 zum Einrasten in das Klicksystem 41 des Pedals 40 bringt, so stehen das vordere Klickelement 21 der Schuhplatte 1 und das Pedal 40 sowie das hintere Klicksystem 22 der Schuhplatte 1 und das Klicksystem 41 in den in Fig. 6 dargestellten Verhältnissen. Da das Ein- und Ausrasten der Schuhplatte 1 für Rennradpedale in das bzw. aus dem Pedal 40 und dem Klicksystem 41 häufig stattfindet, ist die Schuhplatte 1 für Rennradpedale aus einem starren Keramik-Material von einer extrem großen Härte oder einem technischen Kunststoff (Polyoxymethylen, POM) hergestellt, damit eine Schuhplatte 1 für Rennradpedale erzielt wird, die eine große Härte und einen kleinen Reibungskoeffizienten aufweist und sich aufgrund dieser Beschaffenheit leicht vom Klicksystem 41 des Pedals 40 löst.

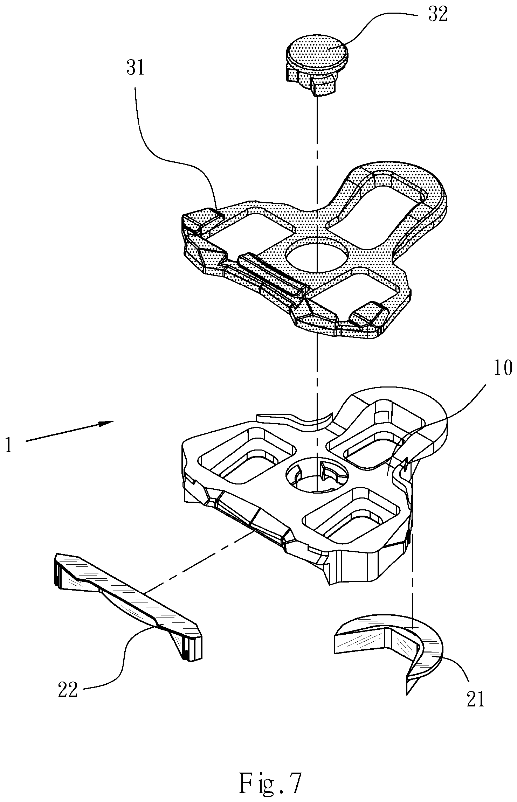

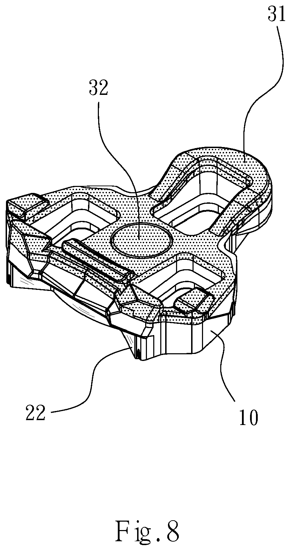

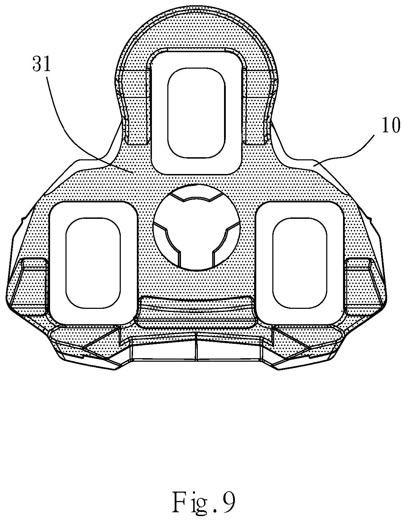

Wie in Fig. 7 bis Fig. 9 gezeigt ist, ist es möglich, an der Unterseite der grundlegenden Klickplatte 10 der Schuhplatte 1 für Rennradpedale eine großflächige Rutschhemmscheibe 31 anzubringen, wobei die Rutschhemmscheibe 31 als ganze Scheibe auf die Unterseite der grundlegenden Klickplatte 10 spritzgegossen wird, wobei auf diese Weise eine leichte Herstellung und eine erhöhte Festigkeit erzielt werden. Somit wird eine zweckmäßig besser zusammengebaute und effektiver rutschhemmende Schuhplatte 1 für Rennradpedale realisiert.

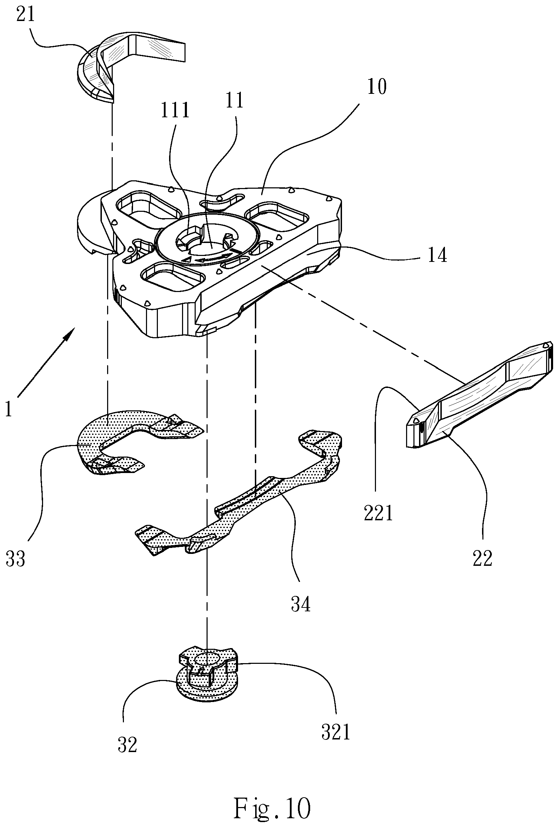

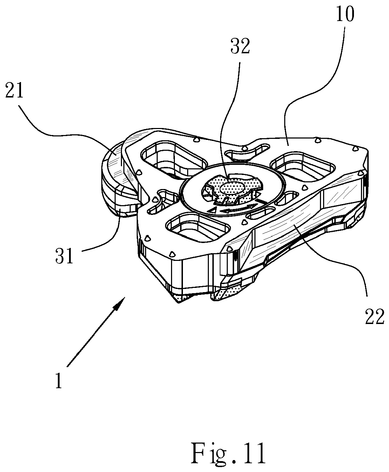

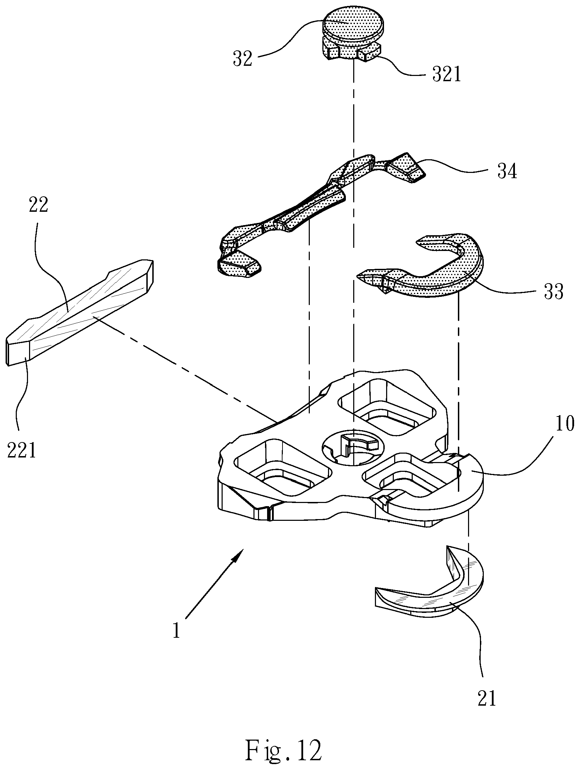

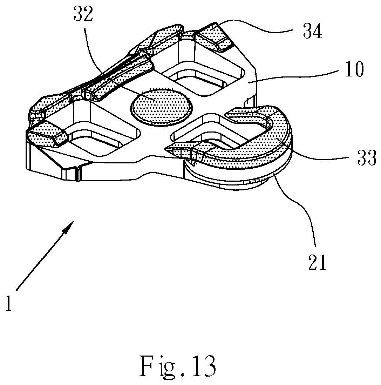

In Fig. 10 bis Fig. 13 ist ein zweites Ausführungsbeispiel einer erfindungsgemäßen, aus Bauteilen von drei Härten einteilig ausgebildeten Schuhplatte 1 für Rennradpedale dargestellt. Die Schuhplatte 1 umfasst eine grundlegende Klickplatte 10, die etwas plattenförmig ausgebildet ist, wobei die Oberseite der grundlegenden Klickplatte 10 in einer Schuhsohle 51 eines Fahrradschuhs 50 montiert wird, wobei ein vorderes Klickelement 21 am vorderen Ende der Oberseite der grundlegenden Klickplatte 10, ein hinteres Klickelement 22 am hinteren Ende der Oberseite der grundlegenden Klickplatte 10, eine vordere Rutschhemmscheibe 33 an der Vorderseite der untersten Lage der grundlegenden Klickplatte 10, eine mittlere Rutschhemmscheibe 32 in der Mitte der untersten Lage der grundlegenden Klickplatte 10 und eine hintere Rutschhemmscheibe 34 an der Hinterseite der grundlegenden Klickplatte 10 angeordnet ist, wobei die grundlegende Klickplatte 10, das vordere Klickelement 21, das hintere Klickelement 22, die vordere Rutschhemmscheibe 33, die mittlere Rutschhemmscheibe 32 und die hintere Rutschhemmscheibe 34 zusammengesetzt und einteilig ausgebildet sind, wobei das vordere Klickelement 21 und das hintere Klickelement 22 aus einem starren Keramik-Material von einer extrem großen Härte oder einem technischen Kunststoff (Polyoxymethylen, POM) , die grundlegende Klickplatte 10 aus einem Verbundstoff oder glasgefülltem Nylon und die vordere, mittlere und hintere Rutschhemmscheibe 33, 32, 34 aus einem weichen Kunststoff (thermoplastischem Polyurethan, TPU) , Kautschuk oder einem Kautschuk oder Kunststoff nachahmenden Material hergestellt sind, wobei das vordere und hintere Klickelement 21, 22 einen kleinen Reibungskoeffizienten aufweisen, dadurch glatt sind und sich leicht vom Klicksystem 41 des Pedals 40 lösen, wobei die vordere, mittlere und hintere Rutschhemmscheibe 33, 32, 34 einen großen Reibungskoeffizienten aufweisen, der dafür sorgt, dass der Benutzer mit den Fahrradschuhen besser laufen kann.

Obwohl die vorliegende Erfindung anhand der Ausführungsbeispiele detailliert beschrieben worden ist, ist für den Fachmann selbstverständlich, dass die Erfindung nicht auf diese Ausführungsbeispiele beschränkt ist, sondern dass vielmehr Abwandlungen in der Weise möglich sind, dass einzelne Merkmale weggelassen oder andersartige Kombinationen von Merkmalen verwirklicht werden können, solange der Schutzbereich der beigefügten Ansprüche nicht verlassen wird. Die Offenbarung der vorliegenden Erfindung schließt sämtliche Kombinationen der vorgestellten Einzelmerkmale mit ein.

### Bezugszeichenliste

- 1: Schuhplatte für Rennradpedale
- 10: grundlegende Klickplatte
- 11: Öffnung
- 111: Aussparung mit vorspringenden Zähnen
- 14: mehrwinklige dreidimensionale Schnittfläche
- 21: vorderes Klickelement
- 22: hinteres Klickelement
- 221: mehrwinklige Schnittfläche
- 31: Rutschhemmscheibe
- 32: mittlere Rutschhemmscheibe
- 321: Säule
- 33: vordere Rutschhemmscheibe
- 34: hintere Rutschhemmscheibe
- 40: Pedal
- 41: Klicksystem
- 50: Fahrradschuh
- 51: Schuhsohle

## Patentansprüche

1. Schuhplatte für Rennradpedale, die aus Bauteilen von drei Härten einteilig ausgebildet ist und umfasst:
eine grundlegende Klickplatte (10), die etwas plattenförmig ausgebildet ist, wobei die Oberseite der grundlegenden Klickplatte (10) in einer Schuhsohle (51) eines Fahrradschuhs (50) montiert wird, wobei ein vorderes Klickelement (21) am vorderen Ende der Oberseite der grundlegenden Klickplatte (10), ein hinteres Klickelement (22) am hinteren Ende der Oberseite der grundlegenden Klickplatte (10) und eine Rutschhemmscheibe (31) in der untersten Lage der grundlegenden Klickplatte (10) angeordnet ist, wobei die grundlegende Klickplatte (10), das vordere Klickelement (21), das hintere Klickelement (22) und die Rutschhemmscheibe (31) zusammengesetzt und einteilig ausgebildet sind, wobei das vordere und hintere Klickelement (21, 22) aus einem starren Keramik-Material oder einem technischen Kunststoff, vorzugsweise Polyoxymethylen , die grundlegende Klickplatte (10) aus einem Verbundstoff oder glasgefülltem Nylon und die Rutschhemmscheibe (31) aus einem weichen Kunststoff, vorzugsweise thermoplastischem Polyurethan , Kautschuk oder einem Kautschuk oder Kunststoff nachahmenden Material hergestellt sind, wobei das vordere und hintere Klickelement (21, 22) einen kleinen Reibungskoeffizienten aufweisen, dadurch glatt sind und sich leicht von einem Klicksystem (41) eines Pedals (40) lösen, sodass das Ein- und Ausrasten der Schuhplatte in das Pedal (40) oder aus dem Pedal (40) effizienter und ungehindert erfolgt, wobei die Rutschhemmscheibe (31) einen großen Reibungskoeffizienten aufweist, der dafür sorgt, dass die Schuhe im statischen Zustand besser bremsen und der Benutzer mit den Fahrradschuhen besser laufen kann, wenn das Fahrrad anhält.

2. Schuhplatte nach Anspruch 1,
**dadurch gekennzeichnet,**
**dass** zusätzlich zur Rutschhemmscheibe (31) ferner eine mittlere Rutschhemmscheibe (32) vorgesehen ist, die in der Mitte der untersten Lage der grundlegenden Klickplatte (10) angeordnet ist, wobei die mittlere Rutschhemmscheibe (32) einen großen Reibungskoeffizienten aufweist, der dafür sorgt, dass die Schuhe im statischen Zustand besser bremsen und der Benutzer mit den Fahrradschuhen besser laufen kann, wenn das Fahrrad anhält, wobei an einer der mittleren Rutschhemmscheibe (32) entsprechenden Stelle an der grundlegenden Klickplatte (10) eine Öffnung (11) angeordnet ist, in der eine Aussparung (111) mit vorspringenden Zähnen ausgebildet ist, wobei an der mittleren Rutschhemmscheibe (32) eine Säule (321) angeordnet ist, mittels deren die mittlere Rutschhemmscheibe (32) und die grundlegende Klickplatte (10) einteilig miteinander verbunden sind, wobei die Säule (321) alternativ so ausgebildet ist, dass sie mit einem weiteren Bauteil zusammensetzbar ist, wobei die Säule (321) so zum Einrasten in die Aussparung (111) mit vorspringenden Zähnen gebracht wird, dass die Säule (321) in der Aussparung (111) befestigt wird.

3. Schuhplatte nach Anspruch 2,
**dadurch gekennzeichnet,**
**dass** die mittlere Rutschhemmscheibe (32) aus einem weichen Kunststoff, vorzugsweise thermoplastischem Polyurethan (TPU), Kautschuk oder einem Kautschuk oder Kunststoff nachahmenden Material hergestellt ist.

4. Schuhplatte nach Anspruch 1,
**dadurch gekennzeichnet,**
**dass** an dem Hinterteil der Oberseite der grundlegenden Klickplatte (10) eine mehrwinklige dreidimensionale Schnittfläche (14) angeordnet ist und am hinteren Klickelement (22) eine entsprechende mehrwinklige Schnittfläche (221) angeordnet ist, die an der mehrwinkligen dreidimensionalen Schnittfläche (14) passgenau anliegen kann, wobei die Kombination der beiden Schnittflächen (14, 221) dafür sorgt, dass die Schuhplatte (1) fester einteilig zusammengesetzt wird.

5. Schuhplatte für Rennradpedale, die aus Bauteilen von drei Härten einteilig ausgebildet ist und umfasst:
eine grundlegende Klickplatte (10), die etwas plattenförmig ausgebildet ist, wobei die Oberseite der grundlegenden Klickplatte (10) in einer Schuhsohle (51) eines Fahrradschuhs (50) montiert wird, wobei ein vorderes Klickelement (21) am vorderen Ende der Oberseite der grundlegenden Klickplatte (10) , ein hinteres Klickelement (22) am hinteren Ende der Oberseite der grundlegenden Klickplatte (10), eine vordere Rutschhemmscheibe (33) an der Vorderseite der untersten Lage der grundlegenden Klickplatte (10), eine mittlere Rutschhemmscheibe (32) in der Mitte der untersten Lage der grundlegenden Klickplatte (10) und eine hintere Rutschhemmscheibe (34) an der Hinterseite der grundlegenden Klickplatte (10) angeordnet ist, wobei die grundlegende Klickplatte (10), das vordere Klickelement (21), das hintere Klickelement (22), die vordere Rutschhemmscheibe (33), die mittlere Rutschhemmscheibe (32) und die hintere Rutschhemmscheibe (34) zusammengesetzt und einteilig ausgebildet sind, wobei das vordere Klickelement (21) und das hintere Klickelement (22) aus einem starren Keramik-Material oder einem technischen Kunststoff, vorzugsweise Polyoxymethylen , die grundlegende Klickplatte (10) aus einem Verbundstoff oder glasgefülltem Nylon und die vordere, mittlere und hintere Rutschhemmscheibe (33, 32, 34) aus einem weichen Kunststoff, vorzugsweise thermoplastischem Polyurethan , Kautschuk oder einem Kautschuk oder Kunststoff nachahmenden Material hergestellt sind, wobei das vordere und hintere Klickelement (21, 22) einen kleinen Reibungskoeffizienten aufweisen, dadurch glatt sind und sich leicht vom Klicksystem (41) des Pedals (40) lösen, wobei die vordere, mittlere und hintere Rutschhemmscheibe (33, 32, 34) einen großen Reibungskoeffizienten aufweisen, der dafür sorgt, dass der Benutzer mit den Fahrradschuhen besser laufen kann.

## Claims

1. A cleat for road bicycle pedals integrally formed of components of three hardnesses and comprising
a basic click plate (10) formed somewhat plate-shaped, the upper surface of the basic click plate (10) being mounted in a shoe sole (51) of a bicycle shoe (50), wherein a front click member (21) is disposed at the front end of the upper surface of the basic click plate (10), a rear click member (22) is disposed at the rear end of the upper surface of the basic click plate (10), and a slip inhibition disk (31) is disposed in the lowermost layer of the basic click plate (10), wherein the basic click plate (10), the front click element (21), the rear click element (22) and the non-slip disk (31) are assembled and formed in one piece, wherein the front and rear click elements (21, 22) are made of a rigid ceramic material or an engineering plastic, preferably polyoxymethylene, the basic click plate (10) is made of a composite material or glass-filled nylon and the anti-slip disk (31) is made of a soft plastic, preferably thermoplastic polyurethane, rubber or a material imitating rubber or plastic, wherein the front and rear click elements (21, 22) have a low coefficient of friction, thereby being smooth and easily disengaging from a click system (41) of a pedal (40) so that engagement and disengagement of the cleat into or out of the pedal (40) is more efficient and unobstructed, wherein the anti-slip disk (31) has a large coefficient of friction which ensures that the shoes brake better in the static state and the user can run better with the bicycle shoes when the bicycle stops.

2. Cleat according to claim 1,
**characterized in that**
**in that**, in addition to the anti-slip disc (31), a central anti-slip disc (32) is also provided, which is arranged in the center of the lowermost layer of the basic click plate (10), the central anti-slip disc (32) having a large coefficient of friction, which ensures that the shoes brake better in the static state and the user can run better with the bicycle shoes when the bicycle stops, an opening (11) being arranged at a point on the basic click plate (10) corresponding to the central anti-slip disc (32), in which a recess (111) with projecting teeth is formed, a column (321) being arranged on the central anti-slip disk (32), by means of which column the central anti-slip disk (32) and the basic click plate (10) are connected to one another in one piece, wherein the pillar (321) is alternatively designed to be assembled with a further component, the pillar (321) being brought to engage in the recess (111) with projecting teeth such that the pillar (321) is fixed in the recess (111).

3. Cleat according to claim 2,
**characterized in**
**that** the central anti-slip disk (32) is made of a soft plastic, preferably thermoplastic polyurethane (TPU), rubber or a material imitating rubber or plastic.

4. Cleat according to claim 1,
**characterized in**
**in that** a multi-angled three-dimensional cut surface (14) is arranged on the rear part of the upper side of the basic click plate (10) and a corresponding multi-angled cut surface (221) is arranged on the rear click element (22), which can fit snugly against the multi-angled three-dimensional cut surface (14), the combination of the two cut surfaces (14, 221) ensuring that the cleat (1) is assembled more firmly in one piece.

5. Cleat for road bike pedals, which is formed in one piece from components of three hardnesses and comprises:
a basic cleat (10) formed somewhat plate-shaped, the upper surface of the basic cleat (10) being mounted in a shoe sole (51) of a bicycle shoe (50), a front click member (21) at the front end of the upper surface of the basic cleat (10), a rear click member (22) at the rear end of the upper surface of the basic cleat (10), a front anti-slip disk (33) at the front side of the lowermost layer of the basic click plate (10), a middle anti-slip disk (32) in the middle of the lowermost layer of the basic click plate (10), and a rear anti-slip disk (34) at the rear side of the basic click plate (10), wherein the basic click plate (10), the front click member (21), the rear click member (22), the front anti-slip disk (33) preferably thermoplastic polyurethane, rubber or a material imitating rubber or plastic, wherein the front and rear click elements (21, 22) have a small coefficient of friction, are thereby smooth and easily detach from the click system (41) of the pedal (40), wherein the front, middle and rear anti-slip discs (33, 32, 34) have a large coefficient of friction, which ensures that the user can walk better with the bicycle shoes.

## Revendications

1. Plaque de chaussure pour pédales de vélo de course, formée d'une seule pièce à partir de composants de trois duretés et comprenant :
une plaque d'encliquetage de base (10) qui est légèrement en forme de plaque, la face supérieure de la plaque d'encliquetage de base (10) étant montée dans une semelle de chaussure (51) d'une chaussure de vélo (50), un élément d'encliquetage avant (21) étant disposé à l'extrémité avant de la face supérieure de la plaque d'encliquetage de base (10), un élément d'encliquetage arrière (22) étant disposé à l'extrémité arrière de la face supérieure de la plaque d'encliquetage de base (10) et un disque antidérapant (31) étant disposé dans la couche la plus basse de la plaque d'encliquetage de base (10), la plaque d'encliquetage de base (10), l'élément d'encliquetage avant (21), l'élément d'encliquetage arrière (22) et le disque antidérapant (31) étant assemblés et formés d'une seule pièce, les éléments d'encliquetage avant et arrière (21, 22) étant réalisés en un matériau céramique rigide ou en une matière plastique technique, de préférence en polyoxyméthylène, la plaque cliquable de base (10) est faite d'un matériau composite ou de nylon chargé de verre et le disque antidérapant (31) est fait d'une matière plastique souple, de préférence de polyuréthane thermoplastique, de caoutchouc ou d'un matériau imitant le caoutchouc ou la matière plastique, les éléments cliquables avant et arrière (21, 22) ayant un faible coefficient de frottement, sont ainsi lisses et se détachent facilement d'un système d'encliquetage (41) d'une pédale (40), de sorte que l'encliquetage et le désencliquetage de la cale dans la pédale (40) ou hors de la pédale (40) s'effectuent de manière plus efficace et sans entrave, le disque antidérapant (31) ayant un grand coefficient de frottement, ce qui permet aux chaussures de mieux freiner à l'état statique et à l'utilisateur de mieux marcher avec les chaussures de vélo lorsque le vélo s'arrête.

2. Plaque de chaussure selon la revendication 1,
**caractérisé en ce que**
**en ce qu'**il est prévu en outre, en plus du disque antidérapant (31), un disque antidérapant central (32) qui est disposé au centre de la couche la plus basse de la plaque d'encliquetage de base (10), le disque antidérapant central (32) présentant un grand coefficient de frottement qui fait que les chaussures freinent mieux à l'état statique et que l'utilisateur peut mieux marcher avec les chaussures de bicyclette lorsque la bicyclette s'arrête, une ouverture (11) étant disposée sur la plaque d'encliquetage de base (10) à un endroit correspondant au disque antidérapant central (32), dans laquelle est formé un évidement (111) avec des dents en saillie, une colonne (321) étant disposée sur le disque antidérapant central (32), au moyen de laquelle le disque antidérapant central (32) et la plaque d'encliquetage de base (10) sont reliés l'un à l'autre en une seule pièce, la colonne (321) étant alternativement conçue pour être assemblée avec un autre composant, la colonne (321) étant amenée à s'encliqueter dans l'évidement (111) avec des dents en saillie de telle sorte que la colonne (321) soit fixée dans l'évidement (111).

3. Plaque de chaussure selon la revendication 2,
**caractérisé en ce que**
que le disque antidérapant central (32) est fabriqué en une matière plastique souple, de préférence en polyuréthane thermoplastique (TPU), en caoutchouc ou en un matériau imitant le caoutchouc ou la matière plastique.

4. Plaque de chaussure selon la revendication 1,
**caractérisée en ce que**
qu'une surface de coupe tridimensionnelle à angles multiples (14) est disposée sur la partie arrière de la face supérieure de la plaque cliquable de base (10) et qu'une surface de coupe à angles multiples correspondante (221) est disposée sur l'élément cliquable arrière (22), laquelle peut s'ajuster avec précision sur la surface de coupe tridimensionnelle à angles multiples (14), la combinaison des deux surfaces de coupe (14, 221) assurant que la plaque de chaussure (1) est assemblée plus fermement en une seule pièce.

5. Plaque de chaussure pour pédales de vélo de course, formée d'une seule pièce à partir d'éléments de trois duretés différentes et comprenant :
une plaque d'encliquetage de base (10) qui est légèrement en forme de plaque, la face supérieure de la plaque d'encliquetage de base (10) étant montée dans une semelle de chaussure (51) d'une chaussure de vélo (50), un élément d'encliquetage avant (21) étant situé à l'extrémité avant de la face supérieure de la plaque d'encliquetage de base (10), un élément d'encliquetage arrière (22) étant situé à l'extrémité arrière de la face supérieure de la plaque d'encliquetage de base (10), un disque antidérapant avant (33) est disposé sur la face avant de la couche la plus basse de la plaque clipsable de base (10), un disque antidérapant central (32) est disposé au centre de la couche la plus basse de la plaque clipsable de base (10) et un disque antidérapant arrière (34) est disposé sur la face arrière de la plaque clipsable de base (10), la plaque clipsable de base (10), l'élément clipsable avant (21), l'élément clipsable arrière (22), le disque antidérapant avant (33), le disque antidérapant central (32) et le disque antidérapant arrière (34) sont assemblés et formés d'une seule pièce, l'élément d'encliquetage avant (21) et l'élément d'encliquetage arrière (22) étant réalisés en un matériau céramique rigide ou en une matière plastique technique, de préférence en polyoxyméthylène, la plaque d'encliquetage de base (10) étant réalisée en un matériau composite ou en nylon chargé de verre et les disques antidérapants avant, central et arrière (33, 32, 34) étant réalisés en une matière plastique souple, de préférence en polyuréthane thermoplastique, en caoutchouc ou en un matériau imitant le caoutchouc ou le plastique, les éléments d'encliquetage avant et arrière (21, 22) ayant un faible coefficient de frottement, étant ainsi lisses et se détachant facilement du système d'encliquetage (41) de la pédale (40), les disques antidérapants avant, central et arrière (33, 32, 34) ayant un grand coefficient de frottement, ce qui permet à l'utilisateur de mieux marcher avec les chaussures de vélo.
